# EUROPEAN PATENT APPLICATION

(11) **EP 4 395 265 A1**
(43) Date of publication of application: **03.07.2024**
(21) Application number: 23159186.8
(22) Date of filing: 28.02.2023
(51) Int. Cl.: H04L 45/28, H04L 43/02, H04L 47/11, H04L 43/065, H04L 41/06, H04L 41/0604, H04L 41/0677, H04L 41/069

(54) **DETECTING WIRED CLIENT STUCK**

(30) Priority: 29.12.2022 US 202218148232
(71) Applicant: Juniper Networks, Inc., Sunnyvale, CA 94089 (US)
(72) Inventor: Cheng, Jing, Sunnyvale, 94089-1206 (US); Shamsundar, Abhiram Madhugiri, Sunnyvale, 94089-1206 (US); Gandhi, Pawan, Sunnyvale, 94089-1206 (US); Wu, Xiaoying, Sunnyvale, 94089-1206 (US); Wang, Jisheng, Sunnyvale, 94089-1206 (US)
(74) Representative: D Young & Co LLP

(57) **Abstract**

Techniques are described for detecting that a client device physically connected to a network device is "stuck," that is, the client device is not sending or receiving network packets with the network device. A network management system (NMS) receives current network statistics of ports of network devices with respect to client devices physically connected to the ports. The NMS identifies a candidate client device connected to a particular port of a particular network device for which the current network statistics indicate an issue. The NMS detects anomalous behavior of the candidate client device based on one or more features of the current network statistics, historical baseline statistics associated with the candidate client device, and peer statistics associated with one or more peer client devices of a same device type as the candidate client device. The NMS outputs a notification of the anomalous behavior.

## Description

This application claims the benefit of US Patent Application No. 18/148,232, filed December 29, 2022.

### TECHNICAL FIELD

The disclosure relates generally to computer networks and, more specifically, to detecting anomalies in communications with wired client devices.

### BACKGROUND

A computer network is a collection of interconnected computing devices that can exchange data and share resources. In a packet-based network, such as the Internet, the computing devices communicate data by dividing the data into variable-length blocks called packets, which are individually routed across the network from a source device to a destination device. The destination device extracts the data from the packets and assembles the data into its original form.

Network providers and organizations (e.g., enterprises) may have networks that include multiple layers of gateways, routers, switches, and access points. Commercial premises or sites, such as offices, hospitals, airports, stadiums, or retail outlets, often install complex wired and wireless network systems. As an example, a site may have one or more client devices (or simply, "clients") connected to a network at a site via a switch or router. Examples of such devices include Voice over Internet Protocol (VoIP) telephones, cameras (e.g., security cameras), printers, etc.

Further, organizations and network providers may use software-defined networking (SDN) in a wide area network (SD-WAN) to manage network connectivity among distributed locations (e.g., sites), such as remote branch or central offices or data centers. SD-WAN extends SDN to enable businesses to create connections quickly and efficiently over the WAN, which may include the Internet or other transport networks that offer various WAN connection types, such as Multi-Protocol Label Switching (MPLS)-based connections, mobile network connections (e.g., 3G, Long-Term Evolution (LTE), 5G), Asymmetric Digital Subscriber Line (ADSL), and so forth. Such connections are typically referred to as "WAN links" or, more simply, as "links." SD-WAN is considered a connectivity solution that is implemented with WAN links as an overlay on top of traditional WAN access, making use of the above or other WAN connection types.

### SUMMARY

The invention is defined in the appended claims. In general, this disclosure describes techniques for detecting that a client device physically connected to a network device is "stuck," that is, the client device is not receiving network packets from the network device, or the client device is not sending network packets to the network device. A network management system may receive various forms of network data, including telemetry data (also referred to as "network statistics"), from ports of network devices of one or more networks and, from such network data, may identify one or more client devices that may be experiencing anomalies, e.g., client devices that should be sending and/or receiving network packets but are not sending and/or receiving network packets.

In some aspects, the techniques include analyzing network statistics collected from various ports of network devices to which wired client devices are physically connected. For example, a port of a switch to which a wired client device, e.g., a printer, a camera, or another Internet of Things (IoT) device, is physically connected may be configured to collect information or statistics about the network traffic to and from the client device. The network statistics may include, but is not limited to, a value (e.g., number or size) of received packets on the port, a value (e.g., number or size) of sent packets on the port, an indication that the client device is physically connected to the port, an indication that the port has (or does not have) traffic, a medium access control (MAC) address of the client device physically connected to the port, or a device type of the client device physically connected to the port. The network statistics are then sent to one or more computing devices, for example, computing devices of a cloud computing environment hosting the network management system.

The network management system may use the current network statistics received from the network devices to identify client devices experiencing anomalies, e.g., stuck clients, and automatically perform remedial actions with respect to the network devices to which the anomalous client devices are physically connected. According to the disclosed techniques, the network management system identifies a candidate client device that is connected to a particular port of a particular network device for which the current network statistics indicate an issue, e.g., current network statistics are below a minimum threshold or above a maximum threshold, or that a combination of current network statistics may indicate of a network anomaly. The network management system then analyzes the current network statistics with respect to historical baseline statistics associated with the candidate client device and peer statistics associated with one or more peer client devices of the same device type as the candidate client device. When anomalous behavior of the candidate client device is detected, the network management system outputs a notification of the anomalous behavior of the candidate client device. In some examples, the notification may comprise an alert informing a network administrator that the candidate client device is stuck, e.g., malfunctioning or misconfigured. In other examples, in response to detection of anomalous behavior, the network management system may send an automated reset and/or restart command to the particular network device to which the candidate client device is physically connected. If a restart of the particular port of the particular network device or a component of a device does not correct the situation and bring the client device back into normal operation, the network management system may then output the notification of the anomalous behavior to the network administrator to investigate and fix or replace the candidate client device.

The techniques of this disclosure provide one or more technical advantages and practical applications over existing systems. As an example, existing systems may not detect that a client device is not transmitting and/or receiving network data in the absence of an error code from the client device indicating an anomaly. The anomaly may not be detected until a user or administrator notices that the client device is not functioning properly and dispatches a technician to fix or replace the client device. As a result, the anomalous behavior of the client device may not be detected or corrected for an extended period of time, resulting in network and/or users experience a prolonged sub-par network performance. For example, a security camera client device that fails to transmit video data may miss recording important security incidents, resulting in losses to an organization. In addition, the need for a skilled technician to travel to a network site to fix or replace the client device can be expensive. A network management system implementing the techniques disclosed herein may rapidly detect a malfunctioning or misconfigured client device, and automatically perform remedial actions, such as alerting the administrator to the client device and/or restarting the port of the network device to which the client device is coupled.

In one example, the disclosure is directed to a network management system comprising: a memory; and one or more processors coupled to the memory and configured to: receive data associated with one or more ports of a plurality of network devices, wherein the data of each port includes current network statistics of the port with respect to a client device physically connected to the port; identify at least one candidate client device connected to a particular port of a particular network device for which the current network statistics indicate an issue; retrieve, for the at least one candidate client device, peer statistics associated with one or more peer client devices of a same device type as the at least one candidate client device; detect anomalous behavior associated with the at least one candidate client device based on one or more features of the current network statistics, historical baseline statistics associated with the at least one candidate client device, and the peer statistics; and output a notification of the anomalous behavior including identification information of the at least one candidate client device.

In another example, the disclosure is directed to a method comprising: receiving, by a network management system, data associated with one or more ports of a plurality of network devices, wherein the data of each port includes current network statistics of the port with respect to a client device physically connected to the port; identifying, by the network management system, at least one candidate client device connected to a particular port of a particular network device for which the current network statistics indicate an issue; retrieving, by the network management system, for the at least one candidate client device, peer statistics associated with one or more peer client devices of a same device type as the at least one candidate client device; detecting, by the network management system, anomalous behavior of the at least one candidate client device based on one or more features of the current network statistics, historical baseline statistics associated with the at least one candidate client device, and the peer statistics; and outputting, by the network management system, a notification of the anomalous behavior including identification information of the at least one candidate client device.

In another example, the disclosure is directed to a computer-readable medium, having instructions stored thereon that, when executed, cause one or more processors to: receive data associated with one or more ports of a plurality of network devices, wherein the data of each port includes current network statistics of the port with respect to a client device physically connected to the port; identify at least one candidate client device connected to a particular port of a particular network device for which the current network statistics indicate an issue; retrieve, for the at least one candidate client device, peer statistics associated with one or more peer client devices of a same device type as the at least one candidate client device; detect anomalous behavior of the at least one candidate client device based on one or more features of the current network statistics, historical baseline statistics associated with the at least one candidate client device, and the peer statistics; and output a notification of the anomalous behavior including identification information of the at least one candidate client device.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a block diagram illustrating an example network system, in accordance with one or more techniques of the disclosure.
FIG. 1B is a block diagram illustrating further details of the example network system of FIG. 1A, in accordance with one or more techniques of the disclosure.
FIG. 2 illustrates a training system that is configured to train a machine learning model to detect anomalous behavior of a wired client device based on network statistics of a port of a network device to which the wired client device is physically connected, in accordance with one or more techniques of the disclosure.
FIG. 3 is a block diagram of an example network management system, in accordance with one or more techniques of the disclosure.
FIG. 4 is a block diagram of an example network device, such as a router, switch or server, in accordance with one or more techniques of the disclosure.
FIG. 5 is a flow chart illustrating an example operation of detecting anomalous behavior of a wired client device physically connected to a network device, in accordance with one or more techniques of the disclosure.

### DETAILED DESCRIPTION

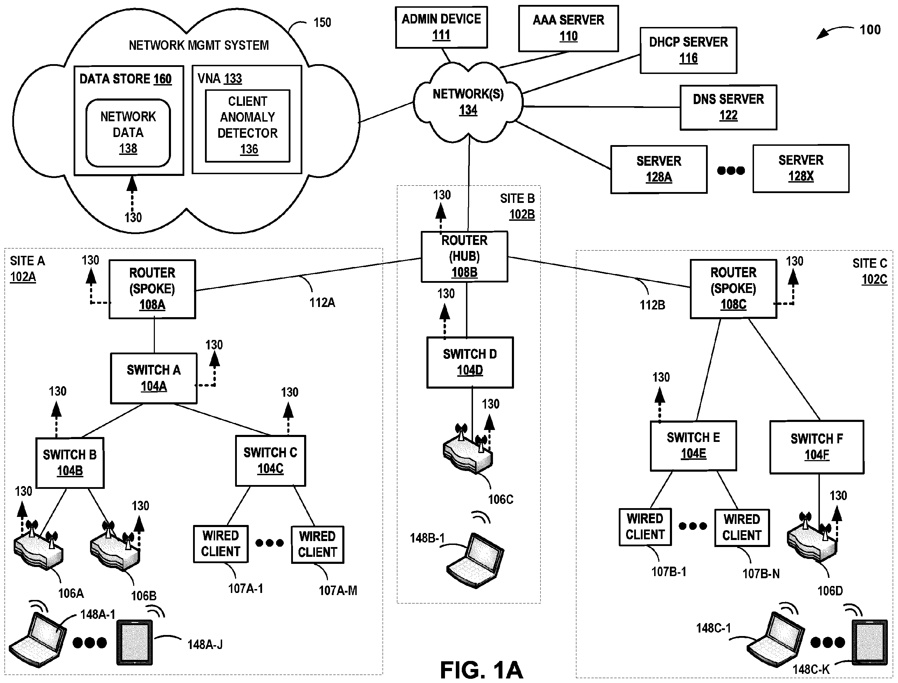

FIG. 1A is a block diagram illustrating an example network system, in accordance with one or more techniques of the disclosure. In the example shown in FIG. 1A, an organization includes three sites 102A-102C arranged in a "hub and spoke" architecture, with site 102B being the hub site and sites 102A and 102C being spoke sites. As an example, the organization may be a large corporation with multiple campuses, where each campus may be a site. Generally speaking, a site may refer to a geographic location. The organization may have sites in different cities, sites that are different campuses within a city, sites that are different buildings within a campus, etc. In some examples, network topologies other than hub and spoke may be used. For example, the network may be a partial mesh topology, a full mesh topology, or other network topology. Further, the network topology may be a hybrid topology. For example, the hubs and sites may be arranged in a hub and spoke topology while internal to a site, the network may have a mesh topology.

Network system 100 also includes switches 104A-104F (collectively "switches 104") and access points (APs) 106A-106D. Each AP 106 may be any type of wireless access point, including, but not limited to, a commercial or organization AP, a wireless router, or any other device capable of providing wireless network access. Site 102B includes router 108B which is configured as a hub router. Router 108B is configured to communicate with router 108A at site 102A via wide area network (WAN) link 112A, where router 108A is configured as a spoke router. Router 108B is configured to communicate with router 108C at site 102C via WAN link 112B, where router 108C is configured as a spoke router. Further, router 108B is configured to communicate with network 134. Router 108B is also configured to communicate with switch 104D, which is configured to communicate with AP 106C.

Site 102A, in addition to router 108A, includes switch 104A that is communicatively coupled to switches 104B and 104C. Switch 104B is communicatively coupled to APs 106A and 106B. Switch 104C is communicatively coupled to wired client devices 107A-1 - 107A-M. Similarly, site 102C, in addition to router 108C, includes switches 104E and 104F. Switch 104E is communicatively coupled to wired clients 107B-1 - 107B-N and switch 104F is communicatively coupled to AP 106D.

Various wireless client devices 148 may be communicatively coupled to APs 106, as shown in FIG. 1A. Wireless client devices 148 may also be referred to as "user equipment devices" (UEs) and/or "user devices." For example, wireless client devices 148A-1-148A-J ("wireless client devices 148A") are currently located at site 102A. Wireless client device 148B-1 is currently located at site 102B. Similarly, a plurality of wireless client devices 148C-1 through 148C-K are currently located at site 102N. A wireless client device 148 of an access point may be any type of wireless client device, including, but not limited to, a mobile device such as a smart phone, tablet or laptop computer, a personal digital assistant (PDA), a wireless terminal, a smart watch, smart ring or other wearable device. A client device 148 may also be an IoT device such as a printer, security device, environmental sensor, or any other device configured to communicate over one or more wireless networks.

Various wired client devices 107 may be physically connected to ports of switches 104 via Ethernet cables. In the example shown in FIG. 1A, wired client devices 107A-1 - 107A-M are physically connected to switch 104C, and wired clients 107B-1 - 107B-N are physically connected to switch 104E. Examples of a wired client device 107 include, but are not limited to, a printer, a VoIP telephone or telephone system, a camera (e.g., a video security camera), a wired sensor, a computer, an Internet of Things (IoT) device, or other such wired client devices. In some examples, wired client devices 107 may include APs (e.g., APs 106) or other network access server (NAS) devices.

Example network system 100 also includes various networking components for providing networking services including, as examples, an Authentication, Authorization and Accounting (AAA) server 110 for authenticating users and/or client devices, a Dynamic Host Configuration Protocol (DHCP) server 116 for dynamically assigning network addresses (e.g., IP addresses) to client devices upon authentication, a Domain Name System (DNS) server 122 for resolving domain names into network addresses, and a plurality of servers 128A-128X (e.g., web servers, databases servers, file servers and the like.

During operation, devices in network system 100 may collect and communicate telemetry data 130 to a network management system (NMS) 150. Telemetry data 130 may vary depending on the type of device providing the information and whether or not the device is configured to provide telemetry data. NMS 150 may store the received telemetry data 130, along with other data about network system 100, as network data 138. NMS 150 may obtain telemetry data 130 using a "push" model, a "pull" model or a combination of a push model and a pull model. In a pull model, NMS 150 may poll network devices in network system 100 and request that the network devices send their respective telemetry data 130 to NMS 150. In a push model, the various network devices of network system 100 periodically or continuously send telemetry data 130 to NMS 150 without NMS 150 having to request telemetry data 130.

Other devices such as routers and gateways, e.g., routers 108, may also provide telemetry data 130. For example, gateway devices (e.g., routers 108) may report telemetry data 130 associated with both wired connections and virtual or logical connections. A given network device may establish multiple logical paths (e.g., peer paths or tunnels) over a WAN with multiple other network devices on a single physical interface. Each of the network devices may include a software agent or other module configured to report path data collected at a logical path level to NMS 150 in the cloud and/or the path data may be retrieved from the network devices by NMS 150 via an application programming interface (API) or protocol. In some aspects, the telemetry data may include labels identifying the network device as a hub or data center router. In some aspects, the telemetry data may identify the router as a spoke router (e.g., a branch office router).

In some examples, a network device may provide network statistics as part of telemetry data 130. For example, in accordance with the techniques of this disclosure, switch 104C may provide network statistics of each port to which wired client devices 107 are physically connected. The network statistics of a particular port may include, but are not limited to, a value (e.g., number or size) of received packets on the port, a value (e.g., number or size) of sent packets on the port, an indication that the client device is physically connected to the port, an indication that the port has (or does not have) traffic, a medium access control (MAC) address of the client device physically connected to the port, or a device type of the client device physically connected to the port. The device type of a wired client device may comprise a specific vendor or manufacturer and/or a specific operating system or version of the wired client device.

In other examples, a network device may provide Link Layer Discovery Protocol (LLDP) data as part of telemetry data 130. LLDP is a layer 2 neighbor discovery protocol that allows devices to advertise device information to their directly connected peers/neighbors. As an example, a switch 104 may provide telemetry data regarding connectivity to other switches, routers, gateways etc. In some aspects, switches 104 may provide LLDP data identifying the switch reporting the LLDP data and identifying upstream devices (e.g., routers 108) and downstream devices (e.g., wired client devices 107) physically connected to ports of the switch and the types of ports. In some cases, the LLDP data may identify the device type of each of the connected wired client devices.

In some examples, NMS 150 may receive telemetry data 130 from one or more devices within network system 100. For example, each AP of APs 106 may output telemetry data directly to NMS 150, each switch of switches 104 may output telemetry data to NMS 150, and each network device of routers 108 may output telemetry data directly to NMS 150. The telemetry data 130 received by NMS 150 may include telemetry data from any one or combination of devices of switches 104, APs 106, routers 108, and (in some cases) wireless client devices 148 and/or wired client devices 107.

In some examples, each device within switches 104, APs 106, routers 108, and (in some cases) client devices 148, 107, may form a secure connection between the respective device and NMS 150. In some examples, each secure connection may include a socket (e.g., an HTTPS kernel). This may allow each device to send telemetry data to NMS 150 in a manner that is secure. In some examples, a client device of client devices 148, 107 may communicate directly with NMS 150 when the client device downloads a software development kit (SDK). The SDK may enable the client device of client devices 148, 107 to send telemetry data 130 directly to NMS 150, e.g., via an API, without sending the data via switches 104, APs 106, and/or routers 108.

In the example of FIG. 1A, NMS 150 is a cloud-based computing platform that manages wired and wireless networks at one or more of sites 102. As further described herein, NMS 150 provides an integrated suite of management tools and implements various techniques of this disclosure. In general, NMS 150 may provide a cloud-based platform for network data acquisition, monitoring, activity logging, reporting, predictive analytics, network anomaly identification, and anomaly mitigation such as (but not limited to) alert generation. In some examples, NMS 150 outputs notifications, such as alerts, alarms, graphical indicators on dashboards, log messages, text / SMS messages, email messages, and the like, and/or recommendations regarding network issues to an administrator ("admin") device 111. Additionally, in some examples, NMS 150 operates in response to configuration input received from admin device 111.

Admin device 111 may comprise a computing device operated by IT personnel or a network administrator associated with one or more of sites 102. Admin device 111 may be implemented as any suitable device for presenting output and/or accepting user input. For instance, admin device 111 may include a display. Admin device 111 may be a computing system, such as a mobile or non-mobile (e.g., wired) computing device operated by a user. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 150 such that admin device 111 may communicate with NMS 150 via network 134 or other means of communication.

In the example of FIG. 1A, NMS 150 includes a virtual network assistant (VNA) 133 and a data store 160. As described above, NMS 150 observes, collects and/or receives telemetry data 130 for a variety of network devices and stores the telemetry data 130 and other data as network data 138 in data store 160. Network data 138 may include a plurality of states or parameters indicative of one or more aspects of wired and/or wireless network performance. Network data 138 may take the form of data extracted from messages, counters, and statistics, for example information obtained from telemetry data 130.

VNA 133 analyzes network data 138 to provide real-time insights and simplified troubleshooting for IT operations, and automatically takes corrective action or provides recommendations to proactively address various wired and wireless network issues. VNA 133 may, for example, include a network data processing platform configured to process hundreds or thousands of concurrent streams of network data from sensors and/or agents associated various devices in network system 100 (e.g., routers 108, switches 104, and/or APs 106) and/or nodes within network 134. For example, VNA 133 of NMS 150 may include an underlying analytics and network error identification engine and alerting system in accordance with various examples described herein. The underlying analytics engine of VNA 133 may apply historical data and models to the inbound network data streams to compute assertions, such as identified anomalies or predicted occurrences of events constituting network error conditions. Further, VNA 133 may provide real-time alerting and reporting to notify admin device 111 of any predicted events, anomalies, trends, and may perform root cause analysis and automated or assisted error remediation. In some examples, VNA 133 of NMS 150 may apply machine learning techniques to identify the root cause of error conditions detected or predicted from the network data streams. If the root cause may be automatically resolved, VNA 133 invokes one or more corrective actions to correct the root cause of the error condition, thus automatically improving the user experience.

Further example details of operations implemented by the VNA 133 of NMS 150 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In accordance with one specific implementation, a computing device is part of NMS 150. In accordance with other implementations, NMS 150 may comprise one or more computing devices, dedicated servers, virtual machines, containers, services, or other forms of environments for performing the techniques described herein. Similarly, computational resources and components implementing VNA 133 may be part of NMS 150, may execute on other servers or execution environments, or may be distributed to nodes within network 134 (e.g., routers, switches, controllers, gateways, and the like).

In accordance with the techniques described in this disclosure, VNA 133 of NMS 150 includes a client anomaly detector 136 configured to detect when one or more of wired client devices physically connected to a network device, e.g., a switch or a router, are "stuck," that is, the client device is not receiving network packets from the network device, or the client device is not sending network packets to the network device. As described above, NMS 150 receives various telemetry data 130 (also referred to as "network statistics") from ports of network devices, such as switches 104, and, from such network statistics, identifies one or more of wired client devices 107 that may be experiencing anomalies, e.g., client devices that should be sending and/or receiving network packets but are not sending or receiving network packets.

In some aspects, client anomaly detector 136 is configured to analyze the network statistics collected from various ports of switches 104C and 104E to which wired client devices 107 are physically connected. Client anomaly detector 136 may use the current network statistics received from switches 104C, 104E to identify wired client devices 107 experiencing anomalies, e.g., stuck clients, and automatically perform remedial actions with respect to switches 104C, 104E to which the anomalous client devices are physically connected. According to the disclosed techniques, client anomaly detector 136 identifies at least one candidate client device, e.g., wired client device 107A-1, that is connected to a particular port of a particular network device, e.g., switch 104C, for which the current network statistics are below a minimum threshold, above a maximum threshold, or that a combination of the network statistics may indicate a network anomaly. Client anomaly detector 136 then analyzes the current network statistics included in network data 138 with respect to historical baseline statistics associated with candidate client device 107A-1 and peer statistics associated with one or more peer client devices 107 of the same device type as candidate client device 107A-1.

For example, in some aspects, client anomaly detector 136 may utilize a machine learning model that has been trained using either supervised or unsupervised machine learning techniques to identify an expected amount of network traffic at the particular port of the particular network device based on the network data 138, and determine whether candidate client device 107A-1 (and/or the network communication between the client device and a network device) is exhibiting anomalous behavior. For example, client anomaly detector 136 may detect that candidate client device 107A-1 is not sending or receiving an amount of data that would be expected (e.g., either due to a malfunction of the client device, malfunction of a switch connected to the client device, or a misconfiguration of a switch connected to the client device) based on the historical baseline statistics of transmission/reception patterns for the client device and based on peer statistics of current transmission/reception values for peer client devices. In other words, client anomaly detector 136 may determine whether candidate client device 107A-1 has become "stuck." In some aspects, client anomaly detector 136 may also utilize seasonality data (e.g., time of day, day of week, holidays, etc.) to make a determination of whether candidate client device 107A-1 is stuck.

When anomalous behavior of candidate client device 107A-1 is detected, client anomaly detector 136 outputs a notification of the anomalous behavior of candidate client device 107A-1. In some examples, the notification may comprise an alert sent to admin device 111 informing a network administrator that candidate client device 107A-1 is stuck, e.g., malfunctioning or misconfigured, such as the device or the specific port of the device to which the client is connected is malfunctioning or misconfigured. In other examples, in response to detection of anomalous behavior, client anomaly detector 136 may send an automated reset and/or restart command to the particular network device, e.g., switch 104C, to which candidate client device 107A-1 is physically connected. In another example, client anomaly detector 136 may send a command to reconfigure the particular network device, such as to change parameter settings of the device or download a different software version. If a restart of the particular port of switch 104C, or other mitigation action as described above, does not correct the situation and bring client device 107A-1 back into normal operation, client anomaly detector 136 may then output the notification of the anomalous behavior to admin device 111 to prompt the network administrator to investigate and fix or replace the candidate client device 107A-1.

The techniques of this disclosure provide one or more technical advantages and practical applications over existing systems. As an example, existing systems may not detect that a client device is not transmitting and/or receiving network data in the absence of an error code from the client device indicating an anomaly. The anomaly may not be detected until a user or administrator notices that the client device is not functioning properly and dispatches a technician to fix or replace the client device or the network device through which the client device is attached to the network. As a result, the anomalous behavior of the client device may not be detected or corrected for an extended period of time, resulting in network users experiences prolonged sub-par network performance. For example, a security camera client device that fails to transmit video data (or that the switch connected to the security camera client device is misconfigured or malfunctioned) may miss recording important security incidents, resulting in losses to an organization. In addition, the need for a skilled technician to travel to a network site to fix or replace the client device can be expensive. NMS 150 implementing the techniques disclosed herein may rapidly detect a malfunctioning or misconfigured wired client device 107, and automatically perform remedial actions, such as alerting the administrator via admin device 111 to the stuck client device, restarting the port of the network device to which the stuck client device is coupled, and/or reconfiguring the client device or switch connected to the client device, which in some examples, may be performed in a less expensive and/or time consuming manner.

Although the techniques of the present disclosure are described in this example as being performed by NMS 150, techniques described herein may be performed by any other computing device(s), system(s), and/or server(s), and that the disclosure is not limited in this respect. For example, one or more computing device(s) configured to execute the functionality of the techniques of the disclosure may reside in a dedicated server or be included in any other server (such as any of servers 128A-128N) in addition to or other than NMS 150, or may be distributed throughout network system 100, and may or may not form a part of NMS 150. In addition, FIG. 1A illustrates an example network system 100 having three sites 102. A network system may have fewer or more sites than those illustrated in FIG. 1A. Additionally, sites may have a fewer or greater number network devices such as routers 108, switches 104, and APs 106 than those shown in FIG. 1A.

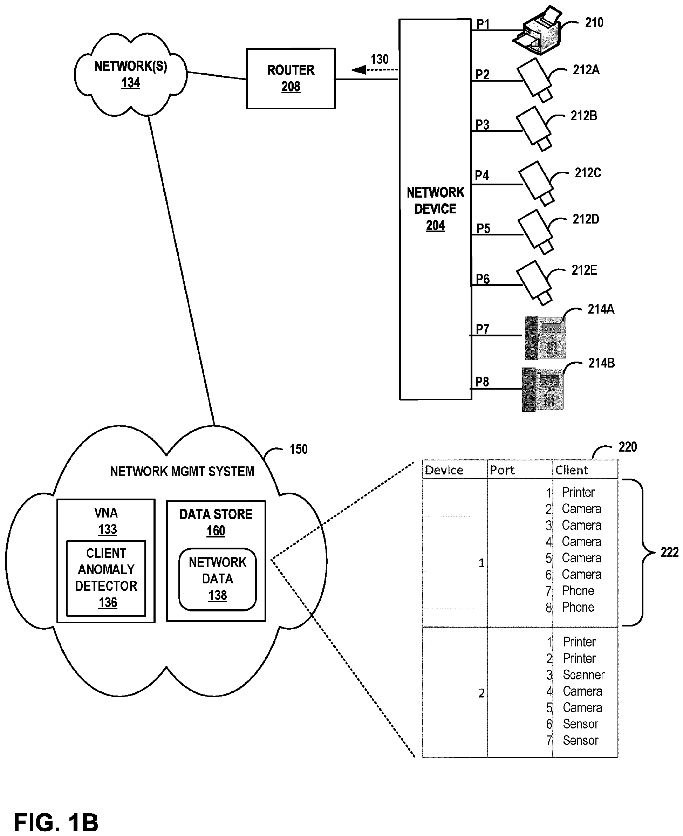

FIG. 1B is a block diagram illustrating further details of the network system of FIG. 1A, in accordance with one or more techniques of the disclosure. FIG. 1B shows an example of a network device 204 that reports telemetry data 130 to NMS 150 via router 208. Network device 204 may be an implementation of any of switches 104 or routers 108 shown in FIG. 1A. Router 208 may be an implementation of any of routers 108 shown in FIG. 1A.

As NMS 150 discovers devices coupled to network 134, it can generate a device mapping table 220 for certain devices. For example, NMS 150 may generate device mapping table 220 having entries representing the wired client devices coupled to ports of network device 204. For example, NMS 150 may receive telemetry data from network device 204 coupled to network 134 that identifies the physically connected client devices (e.g., a printer, camera, phone, sensor, IoT device, etc.) and the associated device types (e.g., a specific vendor or manufacturer and/or a specific operating system or version of the wired client device). In some examples, NMS 150 may determine the device type of each of the client devices physically connected to network device 204 based on a MAC address of the at least one candidate client device. The device type of the client device may be determined by the organizationally unique identifier (OUI) indicated by the first six digits of the MAC address of the client device. In other examples, NMS 150 may determine the device type of each of the client devices physically connected to network device 204 based on LLDP data reported by network device 204. In other examples, an IT technician may manually enter the information indicated in table 220.

In the example shown in FIG. 1B, network device 204 may be an eight-port switch having various wired client devices 210-214 physically connected to the switch. In this example, a printer 210 is coupled to port one (P1) of the switch, cameras 212A-212E are coupled to ports two through six (P2-P6) of the switch, and VoIP phones 214A and 214B are coupled to port seven (P7) and port eight (P8) of the switch. In the example shown in FIG. 1B, entries 222 of mapping table 220 represent the wired client devices physically connected to network device 204 (i.e., "device 1" in mapping table 220). Other network devices, e.g., switches and/or routers, may be represented in further entries of device mapping table 220 (e.g., "device 2" having other wired client devices coupled to ports 1-7).

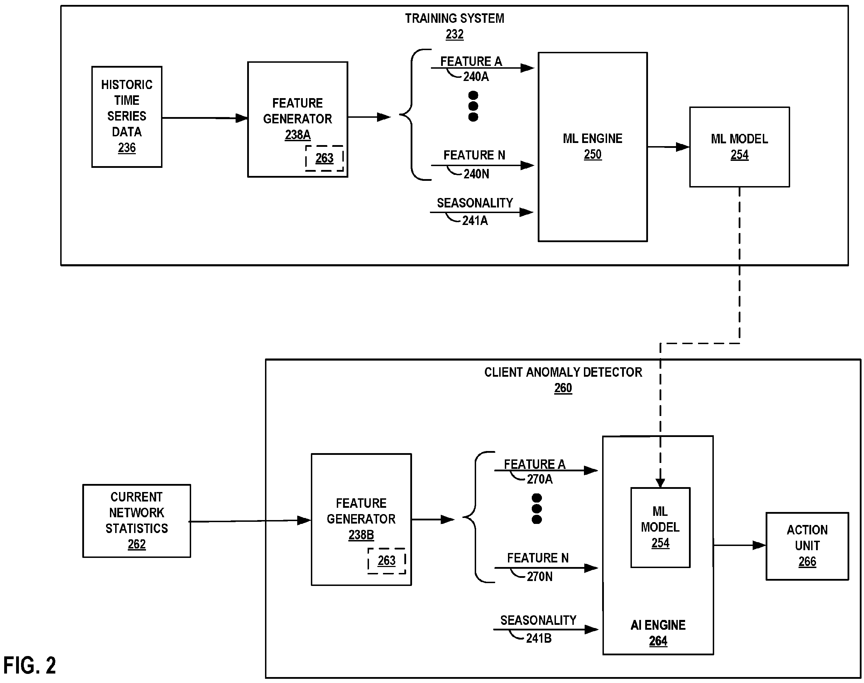

FIG. 2 illustrates a training system 232 that is configured to train machine learning (ML) model 254 for use by client anomaly detector 260 to detect anomalous behavior of a wired client device based on network statistics of a port of a network device to which the wired client device is physically connected, in accordance with one or more techniques of the disclosure. Client anomaly detector 260 may operate substantially similar to client anomaly detector 136 from FIGS. 1A-1B.

In the example of FIG. 2, training system 232 includes ML engine 250 configured to use supervised or unsupervised machine learning techniques to generate ML model 254 capable of detecting anomalous behavior exhibited by a wired client device. In one specific example, ML engine 250 uses supervised machine learning techniques to train a regression algorithm based on historic time series data 236 as training data. Historic time series data 236 may comprise a time series of historic network statistics and other data related to network communications between network device ports and wired client devices. In some examples, the network statistics and other data of historic time series data 236 may be labeled as being associated with an "anomalous" client device or a "normal" or "not anomalous" client device. Alternatively, the network statistics and other data of historic time series data 236 may be labeled with a behavior score associated with the client device (e.g., ranging from 0 to 100, with 0 indicating no anomaly and 100 indicating anomalous behavior).

Feature generator 238A of training system 232 may generate features 240A-240N based on historic time series data 236. In some examples, feature generator 238A may generate features based on baseline statistics, e.g., historical baseline statistics 263. Historical baseline statistics 263 may include network statistics from the ports of the network devices over a certain historic time period, e.g., the previous 5 minutes, the previous 7 minutes, the previous hour, the previous day or days, or the like. ML engine 250 may then train a machine learning algorithm using features 240 along with seasonality data 241A to generate ML model 254. Seasonality data 241A may include data regarding time of day, day of week, holidays, and the like associated with the historic time series data 236. For example, based on features 240 and seasonality data 241A, ML engine 250 may generate ML model 254 configured to detect anomalous behavior exhibited by a wired client device when the network statistics of a port to which the wired client device is coupled are similar to the historic network statistics labeled as anomalous or with a high behavior score (e.g., greater than 60).

After training, ML model 254 may be deployed for use by AI engine 264 of client anomaly detector 260. During operation, client anomaly detector 260 may receive current network statistics 262 from ports of network devices to which client devices are coupled. Client anomaly detector 260 identifies at least one candidate client device connected to a particular port of a particular network device for which current network statistics 262 are below a minimum threshold, e.g., received packets (rxpkts) at the particular port being equal to zero, above a maximum threshold, e.g., number of retries exceeding a predetermined or a dynamic threshold, or that the combination of network statistics may indicate an issue. Current network statistics 262 may include current network statistics of the particular port of the particular network device to which the candidate client device is coupled and peer statistics (i.e., current network statistics of ports of network devices to which peer client devices, of the same device type as the candidate client device, are coupled). Current network statistics 262 may include information or statistics about network traffic and other data collected from the ports of the network devices during a most recent window of time, e.g., the previous 10 minutes, the previous 20 minutes, or the like.

Feature generator 238B of client anomaly detector 260 may then process current network statistics 262 and historical baseline statistics 263 into features 270. As illustrated, features 270A-270N generated from current network statistics 262 and historical baseline statistics 263 may represent the same type of features as were used by ML engine 250, e.g., features 240A-240N, to generate ML model 254 based on historic time series data 236, but may represent different values.

AI engine 264 applies features 270 along with seasonality data 241B to ML model 254 as input. Seasonality data 241B may include data regarding time of day, day of week, holidays, and the like associated with the current network statistics 263. AI engine 264 subsequently receives output from ML model 254 that is indicative of whether the candidate client device is exhibiting anomalous behavior. In some examples, AI engine 264 may receive output from ML model 254 in the form of a behavior score associated with the candidate client device. The behavior score may be a score ranging from 0 to 100, with 0 indicating no anomaly and 100 indicating anomalous behavior. Client anomaly detector 260 may then detect the anomalous behavior of the candidate client device, with respect to one or both of historical baseline statistics 263 associated with the candidate client device or the peer statistics associated with the peer client devices included in current network statistics 262, based on the behavior score exceeding a threshold value. In some examples, the threshold value may be set relatively high with respect to the range of behavior score values, e.g., 60, 70, 80, or the like.

Historic time series data 236, current network statistics 262, and historical baseline statistics 263 associated with a particular wired client device coupled to a particular port of a particular network device may, as one example, each include various combinations of one or more of the following attributes over varying time periods:
- rx_mcast_packets: number (or size) of multicast packets that the network device received on the port;
- tx_macast_packets: number (or size) of multicast packets that the network device sent on the port;
- rx_ucast_packets: number (or size) of unicast packets that the network device received on the port;
- tx_ucast_packets: number (or size) of unicast packets that the network device sent on the port;
- link: indication that the port of the network device is working (i.e., the client device is physically connected to the port);
- mac_count: indication that the port has traffic to send;
- remote_mac: a MAC address of the client device coupled to the port; and
- remote_manufacturer: a device type of the client device coupled to the port, which may be used to identify peer client devices of the same device type as the client device.

Feature generator 238A, 238B may generate features 240A-240N, 270A-270-N based on network statistics included in any of historic time series data 236 or current network statistics 262. In some examples, features 240A-240N, 270A-270N may include various combinations of one or more of the following:
- duration or time range for which network statistics of a particular port of a particular network device to which a client device is physically connected are below a minimum threshold, e.g., received packets (rxpkts) at the particular port from the client device=0 (i.e., the time range from detection of the client device failure to recovery or removal of the client device);
- current value of sent packets (txpkts) from the particular port to the client device;
- ratio of historical baseline rxpkts to historical baseline txpkts, if rxpkts=0:
   ∘ assume rxpkts=0 at the particular port of the particular network device,
   ∘ calculate the average previous 7 days of rxpkts at the particular port / the previous average 7 days of txpkts at the particular port;
- ratio of txpkts to historical baseline txpkts, if rxpkts=0:
   ∘ assume rxpkts=0 at the particular port of the particular network device,
   ∘ calculate the current txpkts at the particular port / the average previous 7 days of txpkts at the particular port; and
- ratio of peer rxpkts to historical baseline txpkts, if rxpkts=0:
   ∘ assume rxpkts=0 at the particular port of the particular network device,
   ∘ calculate the average rxpkts from the peer client devices of the same device type as the client device / average previous 7 days of txpkts at the particular port.

In response to detecting the anomalous behavior of the candidate client device, action unit 266 of client anomaly detector 260 outputs a notification of the anomalous behavior including identification information of the candidate client device, e.g., the MAC address, IP address, or other unique name or ID associated with the candidate client device. In some examples, the notification may also include identification information of the particular network device and/or the port of the particular network device to which the candidate client device is coupled. Action unit 266 may output the notification of the anomalous behavior via one or more of a user interface, API, webhook, or email for display on a user interface device of an administrator associated with the particular network device, e.g., admin device 111 from FIG. 1A.

In some scenarios, in response to detecting the anomalous behavior of the candidate client device, client anomaly detector 260 may, e.g., via action unit 266, send an automated reset or restart command for the particular network device to "bounce" (i.e., shut down and immediately bring back up) the particular port to which the candidate client device is physically connected. In response to continued detection of the anomalous behavior of the candidate client device after the restart of the particular port, action unit 266 may output the notification of the anomalous behavior. In other scenarios, action unit 266 may send an automated reconfiguration command (e.g., command to update software version, command to change the configuration settings of the device, etc.) for a particular network device connected to the candidate client device to reconfigure the particular network device.

In some examples, current network statistics 262 may be used to augment the historical time series data 236 such that the ML model 254 may continuously adapt in real-time (or near real-time) as the current network statistics 262 are processed.

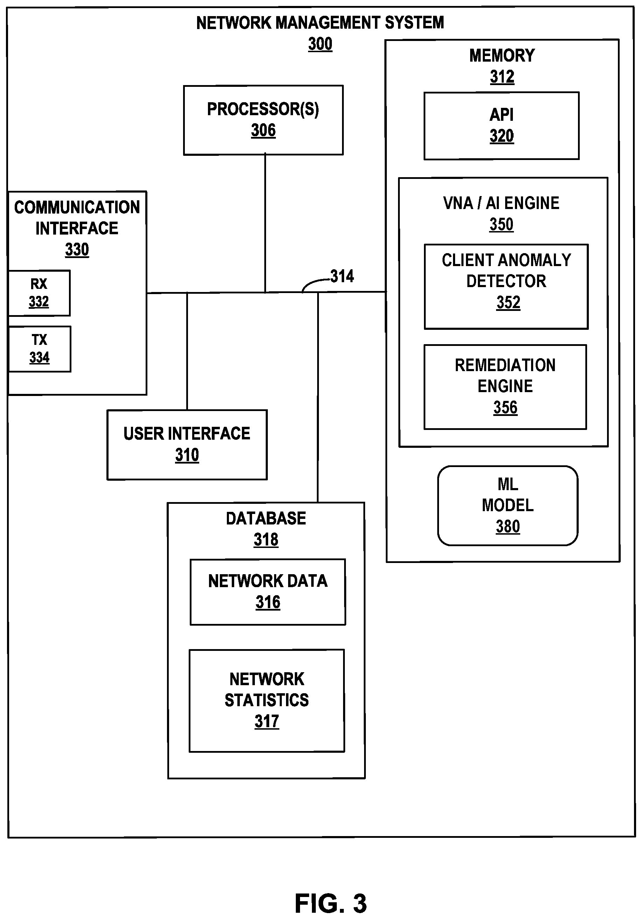

FIG. 3 is a block diagram of an example network management system (NMS) 300 configured to operate in accordance with one or more techniques of the disclosure. NMS 300 may be used to implement, for example, NMS 150 in FIGS. 1A-1B. In some examples, NMS 300 may be part of another server shown in FIG. 1A or a part of any other server. In such examples, NMS 300 is responsible for monitoring and management of one or more networks at sites 102A-102C, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of APs 106 (and their client devices 148), routers 108, switches 104 (and their wired client devices 107), and other network devices of sites 102A-102C of FIG. 1A, which may be used to determine network connectivity, to calculate one or more SLE metrics, update network topology, and/or determine network anomalies, such as stuck clients. NMS 300 analyzes this data for cloud-based management of the wired and wireless networks of sites 102A-102C. The received data, including telemetry data 130, is stored as network data 316 and network statistics 317 in database 318.

Processor(s) 306 execute software instructions, such as those used to define a software or computer program, stored to a computer-readable medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Communications interface 330 may include, for example, an Ethernet interface. Communications interface 330 couples NMS 300 to a network and/or the Internet, such as network 134 from FIGS. 1A-1B, and/or any local area networks. Communications interface 330 includes a receiver 332 and a transmitter 334 by which NMS 300 receives/transmits data and information to/from any of APs 106, switches 104. Routers 108, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data (also referred to as "network statistics"), SLE-related data, or event data received from one or more of APs 106, switches 104, routers 108, or other network nodes used by NMS 300 to remotely monitor the performance of wired and wireless networks at sites 102A-102C. NMS 300 may further transmit data via communications interface 330 to any of network devices such as APs 106, switches 104, routers 108, other network nodes within the wired and wireless networks at sites 102A - 102C, and/or admin device 111 to remotely manage the wired and wireless networks.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In the example shown in FIG. 3, memory 312 includes an API 320 and VNA/AI engine 350. In accordance with the disclosed techniques, VNA/AI engine 350 includes client anomaly detector 352 configured to identify client devices experiencing anomalies, e.g., stuck clients, and remediation engine 356 configured to automatically perform remedial actions with respect to network devices to which the anomalous client devices are physically connected. Client anomaly detector may operate substantially similar to client anomaly detector 136 of NMS 150 from FIGS. 1A-1B and/or client anomaly detector 260 of FIG. 2.

In some examples, client anomaly detector 352 applies a ML model 380 to network statistics 317 collected from ports of network devices to determine whether features of the network statistics indicate anomalous behavior of physically connected client devices, e.g., client devices that should be sending and/or receiving network packets but are not sending or receiving network packets. NMS 300 may also include any other programmed modules, software engines and/or interfaces configured for remote monitoring and management of wired and wireless networks at sites 102A-102C, including remote monitoring and management of any of routers 108, switches 104, APs 106, or wired client devices 107.

VNA/AI engine 350 analyzes data received from network devices as well as its own data to identify when undesired to abnormal states are encountered in one of the wired or wireless networks in which the network devices are operating. For example, VNA/AI engine 350 may identify the occurrence of and/or a root cause of any undesired or abnormal states, e.g., any "stuck" wired client devices. In addition, VNA/AI engine 350 may automatically invoke one or more corrective actions intended to address the stuck wired client devices. Examples of corrective actions that may be invoked by VNA/AI engine 350 may include, but are not limited to, sending an automated reset and/or restart command to network devices to which the stuck wired client devices are physically connected in order to instruct the network devices to restart or "bounce" the ports to which the stuck wired client devices are coupled, sending an automated reconfiguration command to network devices to be reconfigured (e.g., downloading a different software version, changing configurable settings, etc.). This corrective action is given for example purposes only, and the disclosure is not limited in this respect. If automatic corrective actions are not available or do not adequately resolve the occurrence of the undesired to abnormal states, VNA/AI engine 350 may proactively provide a notification including recommended corrective actions to be taken by IT personnel to address the stuck wired client devices.

In accordance with one or more techniques of this disclosure, client anomaly detector 352 is configured to continuously or periodically analyze current network statistics of network statistics 317 received from the ports of the network devices during a window of time (e.g., every 10 minutes; every 20 minutes; every 30 minutes, or the like) to identify one or more candidate client devices from (or to) which network traffic has not been received (or sent) during the window of time. For example, client anomaly detector 352 may identify a candidate client device connected to the particular port of the particular network device based on a value of received packets at the particular port being equal to zero during the window of time.

Client anomaly detector 352 is configured to detect anomalous behavior of the candidate client device based on one or more features of the current network statistics for the candidate client device and peer statistics. More specifically, client anomaly detector 352 retrieves current network statistics associated with the candidate client device and peer statistics associated with one or more peer client devices of a same device type as the candidate client device from network statistics 317. The peer statistics may include current network statistics of the ports of the plurality of network devices to which peer client devices are physically connected during the most recent window of time, e.g., the previous 10 minutes, the previous 20 minutes, the previous 30 minutes, or the like.

Client anomaly detector 352 may then apply features generated from the current network statistics and peer statistics as input to an ML model 380 built to detect anomalous behavior of candidate client devices based on features of the input data. In some examples, the features are generated based on historical baseline statistics, such as network statistics from the ports of the network devices over a certain historic time period, e.g., the previous 5 minutes, the previous hour, the previous day or days, or the like. In some examples, ML model 380 may comprise a supervised ML model that is trained using training data comprising pre-collected, labeled historic network statistics received from ports of network devices to which wired clients devices are coupled. For example, ML model 380 may be generated in a similar manner as described with respect to ML model 254 from FIG. 2. Client anomaly detector 352 may subsequently receive, as output from ML model 380, a behavior score associated with the candidate client device. Client anomaly detector 352 may then detect the anomalous behavior of the candidate client device with respect to one or both of the historical baseline statistics associated with the candidate client device or the peer statistics associated with the peer client devices based on the behavior score exceeding a threshold value.

In some scenarios, client anomaly detector 352 may detect that the candidate client device is operating differently than it has historically and differently than other client devices of the same type are currently operating. Remediation engine 356 may then automatically invoke one or more corrective actions intended to address a single anomalous wired client device. For example, remediation engine 356 may send an automated reset or restart command for the particular network device to "bounce" the particular port to which the candidate client device is physically connected. In response to continued detection by client anomaly detector 352 of the anomalous behavior of the candidate client device after the restart of the particular port of the particular network device, remediation engine 356 may output a notification of the anomalous behavior including identification information of the candidate client device and, in some cases, identification information of the particular port of the particular network device to which the candidate client device is coupled to an administrator associated with the network device to which the anomalous candidate client device is coupled, e.g., admin device 111 from FIG. 1A.

In other scenarios, client anomaly detector 352 may detect that the candidate client device is operating differently than it has historically but similarly to the peer client devices of the same device type. In this scenario, the anomalous behavior may be associated with a misconfiguration or other issue of a particular device type, e.g., a specific vendor or manufacturer and/or a specific operating system or version of the wired client device. Remediation engine 356 may then automatically invoke one or more corrective actions intended to address multiple anomalous wired client device of the same device type. For example, remediation engine 356 may output the notification of the anomalous behavior including identification information of all of the anomalous candidate client devices and, in some cases, the device type of the anomalous candidate client devices to an administrator associated with the site in which the anomalous candidate client devices are operating, e.g., admin device 111 from FIG. 1A.

Although the techniques of the present disclosure are described in this example as performed by NMS 300, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 300, or may be distributed throughout network system 100, and may or may not form a part of NMS 300.

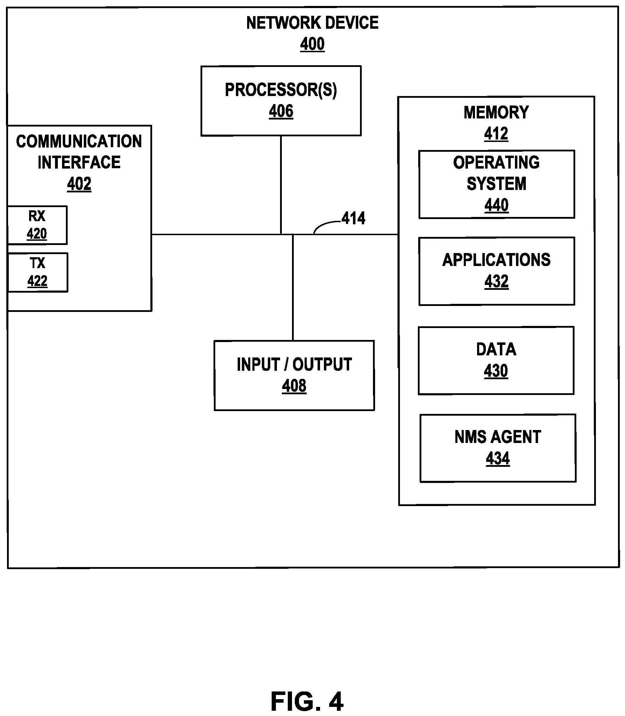

FIG. 4 is a block diagram illustrating an example network device 400 configured according to the techniques described herein. In one or more examples, the network device 400 implements a network device or a server in communication with network 134 of FIGS. 1A-1B, e.g., AAA server 110, DHCP server 116, DNS server 122, VNA 133, web server 128A-128X, or a network device such as, e.g., routers 108, 208; switches 106, network device 204, or the like.

In this example, network device 400 includes a communications interface 402, e.g., an Ethernet interface, a processor 406, input / output 408, e.g., display, buttons, keyboard, keypad, touch screen, mouse, etc., a memory 412 and an assembly of components 416, e.g., assembly of hardware module, e.g., assembly of circuits, coupled together via a bus 414 over which the various elements may interchange data and information. Communications interface 402 couples the network device 400 to a network, such as an enterprise network. Though only one interface is shown by way of example, network devices may have multiple communication interfaces. Communications interface 402 includes a receiver 420 via which the network device 400 can receive data and information. Communications interface 402 includes a transmitter 422, via which the network device 400 can send data and information (e.g., including configuration information, authentication information, web page data, etc.).

In examples where network device 400 comprises a server, network device 400 may receive data and information, e.g., including operation related information, e.g., registration request, AAA services, DHCP requests, Simple Notification Service (SNS) look-ups, and Web page requests via receiver 420, and send data and information, e.g., including configuration information, authentication information, web page data, etc. via transmitter 422.

In some examples, network device 400 may be connected via communication interface 402 to one or more APs or other wired client devices, e.g., a printer, a VoIP telephone or telephone system, a camera, a wired sensor, a computer, an IoT device, or other such wired client devices. For example, network device 400 may include multiple communication interfaces 402 and/or communication interface 402 may include multiple physical ports to connect to multiple wired client devices within a site via respective Ethernet cables. In some examples, each of the wired client devices connected to network device 400 may access a network or the Internet (e.g., network 134 from FIGS. 1A-1B) via communication interface 402 of network device 400. In some examples, one or more of the wired client devices connected to network device 400 may each draw power from network device 400 via the respective Ethernet cable such as from a Power over Ethernet (PoE) port of communication interface 402.

Memory 412 stores executable software applications 432, operating system 440 and data/information 430. Data 430 includes system log and/or error log that stores network statistics and other data for node 400 and/or for each port of communication interface 402 of node 400, based on a logging level according to instructions from the network management system. In some examples, network statistics included in data 430 may include, for each port of communication interface 402, a value (e.g., number or size) of received packets on the port, a value (e.g., number or size) of sent packets on the port, an indication that a wired client device is physically connected to the port, an indication that the port has traffic, a MAC address of the wired client device physically connected to the port, or a device type of the wired client device physically connected to the port. Network device 400 may, in some examples, forward the network data to a network management system (e.g., NMS 150 from FIGS. 1A-1B or NMS 300 from FIG. 3) for analysis as described herein.

The data collected and reported by network device 400 may include streaming data or periodically reported data. In some examples, network device 400 is configured to collect statistics and/or sample other data according to a first periodic interval, e.g., every 3 seconds, every 4 seconds, etc. Network device 400 may store the collected and sampled data, e.g., in a buffer. In some examples, NMS agent 434 may periodically create a package of the network statistics according to a second periodic interval, e.g., every 3 minutes. In some examples, the package of network statistics may also include details about the wired client devices connected to network device 400. NMS agent 434 may then report the package of network statistics to NMS 150 in the cloud. In other examples, NMS 150 may request, retrieve, or otherwise receive the package of network statistics from network device 400 via an API, an open configuration protocol, or another of communication protocols. The package of network statistics created by NMS agent 434 or another module of network device 400 may include a header identifying network device 400 and the network statistics for each port of communication interface 402 of network device 400.

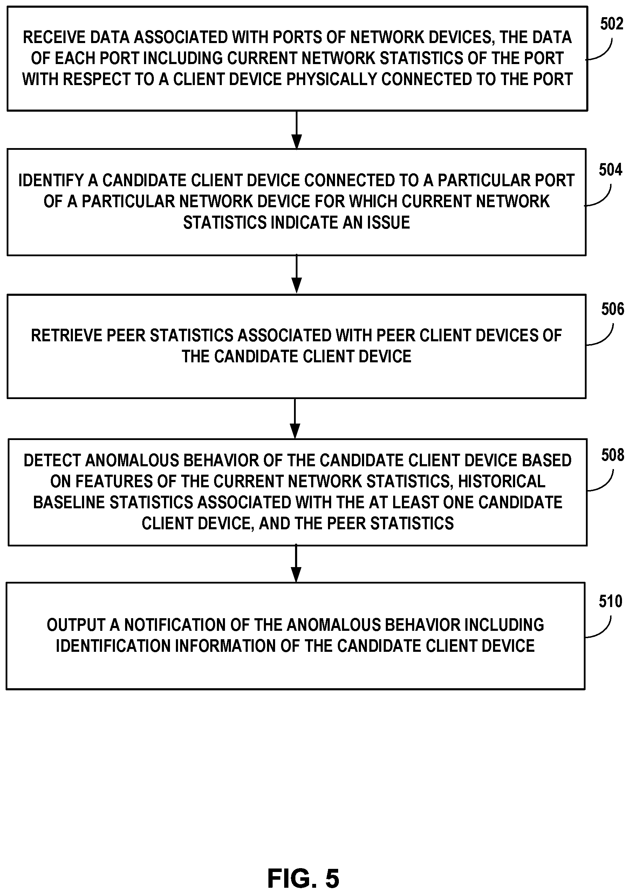

FIG. 5 is a flow chart illustrating an example operation of detecting anomalous behavior of a wired client device physically connected to a network device, in accordance with one or more techniques of the disclosure. The example operation of FIG. 5 is described herein with respect to NMS 300 of FIG. 3 and, more particularly, with respect to client anomaly detector 352 and remediation engine 356 of NMS 300. In other examples, the operation of FIG. 5 may be performed by other computing devices, e.g., client anomaly detector 136 of NMS 150 of FIGS. 1A-1B or client anomaly detector 260 of FIG. 2.

NMS 300 receives data associated with one or more ports of a plurality of network devices (e.g., switches 104 from FIG. 1A or switch 204 from FIG. 1B), where the data of each port includes current network statistics of the port with respect to a client device physically connected to the port (e.g., one of wired client devices 107 from FIG. 1A or one of wired client devices 210, 212, or 214 from FIG. 1B) (502). The current network statistics of each of the ports may include, for example, one or more of a value (e.g., number or size) of received packets, a value (e.g., number or size) of sent packets, an indication that the client device is physically connected to the port, an indication that the port has traffic, a MAC address of the client device physically connected to the port, or a device type of the client device physically connected to the port.

Client anomaly detector 352 of NMS 300 identifies a candidate client device connected to a particular port of a particular network device (e.g., camera 212A connected to P2 of switch 204 from FIG. 1B) for which the current network statistics may indicate an issue (504), e.g., current network statistics are below a minimum threshold, above a maximum threshold, or that a combination of network statistics may indicate a network anomaly (e.g., based on the relationship of the network statistics). In some examples, a minimum threshold may be equivalent to zero packets either received or sent at the particular port to which the candidate client device is connected. For example, client anomaly detector 352 may periodically analyze the current network statistics of the ports of the network devices during a window of time (e.g., every 10 minutes; every 20 minutes; every 30 minutes, or the like). Client anomaly detector 352 may then identify the candidate client device connected to the particular port of the particular network device based on a value (e.g., number or size) of received packets at the particular port and from the candidate client device being equal to zero during the window of time, based on a value (e.g., number of retries) exceeding a predetermined or a dynamic threshold, or based on the relationship between values of different observations that may indicate an issue.

Client anomaly detector 352 retrieves peer statistics associated with one or more peer client devices (e.g., one or more of cameras 212B-212E) (506). The peer statistics may include current network statistics of the ports of the plurality of network devices to which peer client devices are physically connected during the most recent window of time, e.g., the previous 10 minutes, the previous 20 minutes, the previous 30 minutes, or the like. In order to retrieve the peer statistics of the peer client devices, client anomaly detector 352 may first determine the device type of the candidate client device based on a MAC address of the at least one candidate client device. The device type of the client device may be determined by the organizationally unique identifier (OUI) indicated by the first six digits of the MAC address of the client device.

Client anomaly detector 352 detects anomalous behavior of the candidate client device based on one or more features of the current network statistics, historical baseline statistics associated with the at least one candidate client device, and the peer statistics (508). The detected anomalous behavior of the candidate client device may be an inability of the candidate client device to communicate with other network devices, i.e., the device is "stuck," which may be due to a malfunctioning of the candidate client device, a misconfiguration of the candidate client device, a malfunctioning of the device to which the candidate client device is attached, or a misconfiguration of the device to which the candidate client device is attached. In other example scenarios, the anomaly may manifest itself as an inability of the device to operate at an optimal level (e.g., as defined by a particular threshold level).

In some scenarios, client anomaly detector 352 may detect, based on the current network statistics, that the candidate client device is exhibiting the anomalous behavior with respect to both the historical baseline statistics and the peer statistics. In other words, the candidate client device is operating differently than it has historically or/and differently than other client devices of the same type are currently operating. In other scenarios, client anomaly detector 352 may detect, based on the current network statistics and the peer statistics, that all candidate client devices of the same device type are exhibiting the anomalous behavior with respect to the historical baseline statistics. In other words, the candidate client device is operating differently than it has historically but similarly to the peer client devices of the same device type.

More specifically, to detect the anomalous behavior of the at least one candidate client device, client anomaly detector 352 may apply the one or more features of the current network statistics and the peer statistics for the candidate client device to a machine learning model, e.g., ML model 380 from FIG. 3 or ML model 254 from FIG. 2, as input. The features of the current network statistics and the peer statistics for the candidate client device may comprise one or more of: a duration for which the network statistics of the particular port of the particular network device to which the candidate client device is physically connected are below the minimum threshold or above the maximum threshold; a current value of sent packets from the particular port to the candidate client device; a ratio of a historical baseline value of received packets at the particular port to a historical baseline value of sent packets from the particular port; a ratio of the current value of sent packets to the historical baseline value of sent packets; or a ratio of an average value of received packets at the ports of the plurality of network devices from the peer client devices of the same device type as the at least one candidate client device to the historical baseline value of sent packets.

Client anomaly detector 352 may subsequently receive, as output from the machine learning model, a behavior score associated with the candidate client device. Client anomaly detector 352 may then detect the anomalous behavior of the candidate client device with respect to one or both of the historical baseline statistics associated with the candidate client device or the peer statistics associated with the peer client devices based on the behavior score exceeding a threshold value. In some examples, the behavior score may be a score ranging from 0 to 100 with 0 indicating no anomaly and 100 indicating anomalous behavior, and the threshold value may be equivalent to 60, 70, 80, or the like. In some examples, the machine learning model may be generated using supervised machine learning techniques to train a regression algorithm based on historic time series data of the ports of the plurality of network devices. In such examples, the training data may comprise the historic time series data labeled as being associated with an "anomalous" or "not anomalous" client device or, alternatively, labeled with a behavior score associated with the client device. In another example, the machine learning model may be generated using unsupervised machine learning techniques to train a regression algorithm based on historic time series data of the ports of the plurality of network devices.

Remediation engine 356 of NMS 300 outputs a notification of the anomalous behavior including identification information of the candidate client device (510). Remediation engine 356 may output the notification of the anomalous behavior via one or more of a user interface, API, webhook, or email for display on a user interface device of an administrator associated with the particular network device to which the candidate client device is physically connected. In some scenarios, remediation engine 356 may send an automated reset or restart command for the particular network device to "bounce" the particular port to which the candidate client device is physically connected. In another example implementation remediation engine 356 may reconfigure the device to which the candidate client is connected, install another software version on the device with which the candidate client device is associated. In response to continued detection by client anomaly detector 352 of the anomalous behavior of the candidate client device after the mitigation action performed on the particular network device, remediation engine 356 may output the notification of the anomalous behavior.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media.

Various examples have been described. These and other examples are within the scope of the following claims.

Thus, from one perspective, there has now been described techniques for detecting that a client device physically connected to a network device is "stuck," that is, the client device is not sending or receiving network packets with the network device. A network management system (NMS) receives current network statistics of ports of network devices with respect to client devices physically connected to the ports. The NMS identifies a candidate client device connected to a particular port of a particular network device for which the current network statistics indicate an issue. The NMS detects anomalous behavior of the candidate client device based on one or more features of the current network statistics, historical baseline statistics associated with the candidate client device, and peer statistics associated with one or more peer client devices of a same device type as the candidate client device. The NMS outputs a notification of the anomalous behavior.

Further examples of feature combinations taught by the present disclosure are set out in the following numbered clauses:
1. A network management system comprising:
   a memory; and
   one or more processors coupled to the memory and configured to:
      receive data associated with one or more ports of a plurality of network devices, wherein the data of each port includes current network statistics of the port with respect to a client device physically connected to the port;
      identify at least one candidate client device connected to a particular port of a particular network device for which the current network statistics indicate an issue;
      retrieve, for the at least one candidate client device, peer statistics associated with one or more peer client devices of a same device type as the at least one candidate client device;
      detect anomalous behavior associated with the at least one candidate client device based on one or more features of the current network statistics, historical baseline statistics associated with the at least one candidate client device, and the peer statistics; and
      output a notification of the anomalous behavior including identification information of the at least one candidate client device.
2. The system of clause 1, wherein the anomalous behavior associated with the at least one candidate client device comprises an inability of the at least one candidate client device to communicate with the plurality of network devices at an optimal level.
3. The system of clauses 1-2, wherein to detect the anomalous behavior, the one or more processors are configured to detect, based on the current network statistics, that a particular candidate client device is exhibiting the anomalous behavior with respect to the historical baseline statistics and the peer statistics.
4. The system of clauses 1-2, wherein to detect the anomalous behavior, the one or more processors are configured to detect, based on the current network statistics and the peer statistics, that candidate client devices of the same device type are exhibiting the anomalous behavior with respect to the historical baseline statistics.
5. The system of clauses 1-4, wherein the one or more processors are configured to determine a device type of the at least one candidate client device based on a medium access control (MAC) address of the at least one candidate client device.
6. The system of clauses 1-5, wherein to identify the at least one candidate client device, the one or more processors are configured to:
   periodically analyze the current network statistics of the ports of the plurality of network devices during a window of time; and
   identify the at least one candidate client device connected to the particular port of the particular network device based on a value of received packets at the particular port and from the at least one candidate client device being equal to zero during the window of time.
7. The system of clauses 1-6, wherein the current network statistics of each of the ports of the plurality of network devices include one or more of a value of received packets, a value of sent packets, an indication that the client device is physically connected to the port, an indication that the port has traffic, a medium access control (MAC) address of the client device physically connected to the port, or a device type of the client device physically connected to the port.
8. The system of clauses 1-7, wherein the one or more features of the current network statistics, the historical baseline statistics, and the peer statistics for the at least one candidate client device comprise one or more of:
   a duration for which the network statistics of the particular port of the particular network device to which the at least one candidate client device is physically connected are below a minimum threshold;
   a current value of sent packets from the particular port to the at least one candidate client device;
   a ratio of a historical baseline value of received packets at the particular port to a historical baseline value of sent packets from the particular port;
   a ratio of the current value of sent packets to the historical baseline value of sent packets; or
   a ratio of an average value of received packets at the ports of the plurality of network devices from the peer client devices of the same device type as the at least one candidate client device to the historical baseline value of sent packets.
9. The system of clauses 1-8, wherein to detect the anomalous behavior of the at least one candidate client device, the one or more processors are configured to:
   apply the one or more features of the current network statistics and the peer statistics for the at least one candidate client device to a machine learning model as input;
   receive, as output from the machine learning model, a behavior score associated with the at least one candidate client device; and
   detect the anomalous behavior of the at least one candidate client device with respect to one or both of the historical baseline statistics associated with the at least one candidate client device or the peer statistics associated with the peer client devices based on the behavior score exceeding a threshold value.
10. The system of clause 9, wherein the machine learning model is generated using supervised machine learning techniques to train a regression algorithm based on historic time series data of the ports of the plurality of network devices.
11. The system of clauses 1-10, wherein to output the notification, the one or more processors are configured to output the notification of the anomalous behavior via one or more of a user interface, Application Programming Interface (API), webhook, or email for display on a user interface device of an administrator associated with the particular network device to which the at least one candidate client device is physically connected.
12. The system of clauses 1-11, wherein the one or more processors are configured to send an automated restart command to the particular network device to restart the particular port to which the at least one candidate client device is physically connected, and
   wherein to output the notification, the one or more processors are configured to output the notification of the anomalous behavior in response to continued detection of the anomalous behavior of the at least one candidate client device after the restart of the particular port of the particular network device.
13. A method comprising:
   receiving, by a network management system, data associated with one or more ports of a plurality of network devices, wherein the data of each port includes current network statistics of the port with respect to a client device physically connected to the port;
   identifying, by the network management system, at least one candidate client device connected to a particular port of a particular network device for which the current network statistics indicate an issue;
   retrieving, by the network management system, for the at least one candidate client device, peer statistics associated with one or more peer client devices of a same device type as the at least one candidate client device;
   detecting, by the network management system, anomalous behavior of the at least one candidate client device based on one or more features of the current network statistics, historical baseline statistics associated with the at least one candidate client device, and the peer statistics; and
   outputting, by the network management system, a notification of the anomalous behavior including identification information of the at least one candidate client device.
14. The method of clause 13, wherein detecting the anomalous behavior comprises detecting, based on the current network statistics, that a particular candidate client device is exhibiting the anomalous behavior with respect to the historical baseline statistics and the peer statistics.
15. The method of clauses 13-14, wherein detecting the anomalous behavior comprises detecting, based on the current network statistics and the peer statistics, that candidate client devices of the same device type are exhibiting the anomalous behavior with respect to the historical baseline statistics.
16. The method of clauses 13-15, wherein identifying the at least one candidate client device comprises:
   periodically analyzing the current network statistics of the ports of the plurality of network devices during a window of time; and
   identifying the at least one candidate client device connected to the particular port of the particular network device based on a value of received packets at the particular port and from the at least one candidate client device being equal to zero during the window of time.
17. The method of clauses 13-16, wherein the current network statistics of each of the ports of the plurality of network devices include one or more of a value of received packets, a value of sent packets, an indication that the client device is physically connected to the port, an indication that the port has traffic, a medium access control (MAC) address of the client device physically connected to the port, or a device type of the client device physically connected to the port.
18. The method of clauses 13-17, wherein detecting the anomalous behavior of the at least one candidate client device comprises:
   applying the one or more features of the current network statistics, the historical baseline statistics, and the peer statistics for the at least one candidate client device to a machine learning model as input;
   receiving, as output from the machine learning model, a behavior score associated with the at least one candidate client device; and
   detecting the anomalous behavior of the at least one candidate client device with respect to one or both of the historical baseline statistics associated with the at least one candidate client device or the peer statistics associated with the peer client devices based on the behavior score exceeding a threshold value.
19. The method of clauses 13-18, further comprising sending an automated restart command to the particular network device to restart the particular port to which the at least one candidate client device is physically connected, wherein outputting the notification comprises outputting the notification of the anomalous behavior in response to continued detection of the anomalous behavior of the at least one candidate client device after the restart of the particular port of the particular network device.
20. A computer-readable medium, having instructions stored thereon that, when executed, cause one or more processors to:
   receive data associated with one or more ports of a plurality of network devices, wherein the data of each port includes current network statistics of the port with respect to a client device physically connected to the port;
   identify at least one candidate client device connected to a particular port of a particular network device for which the current network statistics indicate an issue;
   retrieve, for the at least one candidate client device, peer statistics associated with one or more peer client devices of a same device type as the at least one candidate client device;
   detect anomalous behavior of the at least one candidate client device based on one or more features of the current network statistics, historical baseline statistics associated with the at least one candidate client device, and the peer statistics; and
   output a notification of the anomalous behavior including identification information of the at least one candidate client device.

## Claims

1. A network management system comprising:
a memory; and
one or more processors coupled to the memory and configured to:
receive data associated with one or more ports of a plurality of network devices, wherein the data of each port includes current network statistics of the port with respect to a client device physically connected to the port;
identify at least one candidate client device connected to a particular port of a particular network device for which the current network statistics indicate an issue;
retrieve, for the at least one candidate client device, peer statistics associated with one or more peer client devices of a same device type as the at least one candidate client device;
detect anomalous behavior associated with the at least one candidate client device based on one or more features of the current network statistics, historical baseline statistics associated with the at least one candidate client device, and the peer statistics; and
output a notification of the anomalous behavior including identification information of the at least one candidate client device.

2. The system of claim 1, wherein the anomalous behavior associated with the at least one candidate client device comprises an inability of the at least one candidate client device to communicate with the plurality of network devices at an optimal level.

3. The system of any of claims 1-2, wherein to detect the anomalous behavior, the one or more processors are configured to detect, based on the current network statistics, that a particular candidate client device is exhibiting the anomalous behavior with respect to the historical baseline statistics and the peer statistics.

4. The system of any of claims 1-2, wherein to detect the anomalous behavior, the one or more processors are configured to detect, based on the current network statistics and the peer statistics, that candidate client devices of the same device type are exhibiting the anomalous behavior with respect to the historical baseline statistics.

5. The system of any of claims 1-4, wherein the one or more processors are configured to determine a device type of the at least one candidate client device based on a medium access control address of the at least one candidate client device.

6. The system of any of claims 1-5, wherein to identify the at least one candidate client device, the one or more processors are configured to:
periodically analyze the current network statistics of the ports of the plurality of network devices during a window of time; and
identify the at least one candidate client device connected to the particular port of the particular network device based on a value of received packets at the particular port and from the at least one candidate client device being equal to zero during the window of time.

7. The system of any of claims 1-6, wherein the current network statistics of each of the ports of the plurality of network devices include one or more of a value of received packets, a value of sent packets, an indication that the client device is physically connected to the port, an indication that the port has traffic, a medium access control address of the client device physically connected to the port, or a device type of the client device physically connected to the port.

8. The system of any of claims 1-7, wherein the one or more features of the current network statistics, the historical baseline statistics, and the peer statistics for the at least one candidate client device comprise one or more of:
a duration for which the network statistics of the particular port of the particular network device to which the at least one candidate client device is physically connected are below a minimum threshold;
a current value of sent packets from the particular port to the at least one candidate client device;
a ratio of a historical baseline value of received packets at the particular port to a historical baseline value of sent packets from the particular port;
a ratio of the current value of sent packets to the historical baseline value of sent packets; or
a ratio of an average value of received packets at the ports of the plurality of network devices from the peer client devices of the same device type as the at least one candidate client device to the historical baseline value of sent packets.

9. The system of any of claims 1-8, wherein to detect the anomalous behavior of the at least one candidate client device, the one or more processors are configured to:
apply the one or more features of the current network statistics and the peer statistics for the at least one candidate client device to a machine learning model as input;
receive, as output from the machine learning model, a behavior score associated with the at least one candidate client device; and
detect the anomalous behavior of the at least one candidate client device with respect to one or both of the historical baseline statistics associated with the at least one candidate client device or the peer statistics associated with the peer client devices based on the behavior score exceeding a threshold value.

10. The system of claim 9, wherein the machine learning model is generated using supervised machine learning techniques to train a regression algorithm based on historic time series data of the ports of the plurality of network devices.

11. The system of any of claims 1-10, wherein to output the notification, the one or more processors are configured to output the notification of the anomalous behavior via one or more of a user interface, Application Programming Interface, webhook, or email for display on a user interface device of an administrator associated with the particular network device to which the at least one candidate client device is physically connected.

12. The system of any of claims 1-11, wherein the one or more processors are configured to send an automated restart command to the particular network device to restart the particular port to which the at least one candidate client device is physically connected, and
wherein to output the notification, the one or more processors are configured to output the notification of the anomalous behavior in response to continued detection of the anomalous behavior of the at least one candidate client device after the restart of the particular port of the particular network device.

13. A method as performed by the network management system of any of claims 1-12.

14. A computer-readable medium comprising instructions for causing one or more programmable processors to perform a method as performed by the network management system of any of claims 1-12.
